(19) Europäisches Patentamt / European Patent Office / Office européen des brevets

(11) EP 3 027 795 B1

(12) # FASCICULE DE BREVET EUROPEEN

(45) Date de publication et mention de la délivrance du brevet:
**19.04.2017 Bulletin 2017/16**

(21) Numéro de dépôt: **14739105.6**

(22) Date de dépôt: **08.07.2014**

(51) Int Cl.:
***D02G 3/18*** (2006.01) ***C08J 5/08*** (2006.01)
***D02G 3/40*** (2006.01)

(86) Numéro de dépôt international:
**PCT/EP2014/064565**

(87) Numéro de publication internationale:
**WO 2015/014578 (05.02.2015 Gazette 2015/05)**

(54) **MONOBRIN EN CVR (COMPOSITE VERRE-RÉSINE) AMÉLIORÉ**

VERBESSERTES GFK (GLASFASERVERSTÄRKTER KUNSTSTOFF) MONOFILAMENT

IMPROVED GFRP (GLASS-FIBER-REINFORCED PLASTIC) MONOFILAMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.08.2013 FR 1357647**

(43) Date de publication de la demande:
**08.06.2016 Bulletin 2016/23**

(73) Titulaires:
- **Compagnie Générale des Etablissements Michelin**
  **63000 Clermont-Ferrand (FR)**
- **MICHELIN Recherche et Technique S.A.**
  **1763 Granges-Paccot (CH)**

(72) Inventeurs:
- **DELFINO, Antonio**
  **F-63040 Clermont-Ferrand Cedex 9 (FR)**
- **MERALDI, Jean-Paul**
  **CH-8049 Zurich (CH)**

(74) Mandataire: **Ribière, Joel**
**Manufacture Française des Pneumatiques Michelin**
**23, place des Carmes-Déchaux**
**DGD/PI - F35 - Ladoux**
**63040 Clermont-Ferrand Cedex (FR)**

(56) Documents cités:
**EP-A1- 1 167 080**
**GB-A- 2 297 332**
**JP-A- H04 202 825**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 027 795 B1

## Description

### 1. DOMAINE DE L'INVENTION

Le domaine de la présente invention est celui des renforts composites utilisables notamment pour le renforcement de produits semi-finis ou d'articles finis en caoutchouc tels que des bandages pour véhicules, du type pneumatiques ou non pneumatiques.

Elle se rapporte plus particulièrement à des monobrins du type en « CVR » (abrégé pour Composite Verre-Résine) à hautes propriétés mécaniques comportant des fibres de verre multifilamentaires continues, unidirectionnelles, noyées dans une résine, utilisables en particulier comme éléments de renforcement (ou « renforts ») de ces bandages.

### 2. ETAT DE LA TECHNIQUE

Les concepteurs de bandages sont depuis longtemps à la recherche de renforts du type textiles ou composites, à faible densité, pouvant se substituer avantageusement et efficacement aux fils ou câbles métalliques conventionnels, en vue de réduire notamment le poids de ces bandages et aussi de pallier les éventuels problèmes de corrosion.

Ainsi, la demande de brevet EP 1 167 080 (ou US 7 032 637) a déjà décrit un monobrin en CVR à hautes propriétés mécaniques, comportant des fibres de verre continues, unidirectionnelles, imprégnées dans une résine réticulée du type vinylester. Ce monobrin en CVR présente, outre une contrainte de rupture en compression élevée, supérieure à sa contrainte de rupture en extension, un allongement à la rupture de l'ordre de 3,0 à 3,5% et un module initial en extension d'au moins 30 GPa ; sa résine thermodurcie présente une Tg (température de transition vitreuse) supérieure à 130°C et un module initial en extension d'au moins 3 GPa.

Grâce aux propriétés ci-dessus, cette demande EP 1 167 080 a montré qu'il était avantageusement possible de substituer de tels monobrins en CVR à des câbles d'acier, comme nouveaux éléments de renforcement de ceintures de bandages pneumatiques, permettant d'alléger ainsi notablement la structure des pneumatiques.

La demande de brevet EP 1 174 250 (équivalents US 6 926 853 ou US 7 484 949) a quant à elle proposé un procédé de fabrication en continu de tels monobrins en CVR, comportant les étapes essentielles suivantes :

- réaliser un arrangement rectiligne de fibres de verre et entraîner cet arrangement dans une direction d'avancement :
- dans une chambre à vide, dégazer l'arrangement de fibres par l'action du vide ;
- en sortie de la chambre à vide, après dégazage, traverser une chambre d'imprégnation sous vide de manière à imprégner ledit arrangement de fibres par la résine à l'état liquide pour obtenir un imprégné contenant les fibres et la résine ;
- faire passer ledit imprégné au travers d'une filière de calibrage ayant une section de surface et de forme prédéfinies, pour lui imposer une forme de monobrin (par exemple un mono filament de section ronde ou un ruban de section rectangulaire) ;
- en aval de la filière, dans une chambre d'irradiation UV, stabiliser, solidifier le monobrin par photopolymérisation de la résine sous l'action des UV ;
- puis enrouler pour stockage le monobrin ainsi obtenu.

L'expérience montre toutefois que les monobrins en CVR décrits dans les demandes de brevet ci-dessus peuvent être encore améliorés, en particulier pour leur utilisation dans les bandages pour véhicules.

On a constaté en particulier, de manière inattendue, que ces monobrins en CVR de l'art antérieur, lorsqu'ils étaient utilisés comme renforts de ceintures de certains bandages pneumatiques, pouvaient subir un certain nombre de casses en compression, par un effondrement visible de leur structure, au cours de la fabrication-même de ces bandages, plus précisément au cours de l'étape finale de cuisson en moule de ces bandages qui on le sait est conduite sous haute pression et à une température très élevée, typiquement supérieure à 160°C.

Il est enfin souhaitable de pouvoir fabriquer ces monobrins à plus haute vitesse, afin de pouvoir en réduire le coût industriel final, et par conséquent celui aussi des produits semi-finis ou des articles finis en caoutchouc les comportant.

### 3. BREVE DESCRIPTION DE L'INVENTION

Or, poursuivant leurs recherches, les Demanderesses ont trouvé un monobrin en CVR nouveau à propriétés améliorées de Tg, d'allongement à la rupture et de module, conférant à ce dernier des propriétés en compression, en particulier sous température élevée, qui sont notablement améliorées par rapport à celles des monobrins en CVR de l'art antérieur, et qui permet de pallier le problème précité. Ce monobrin peut être fabriqué à haute vitesse.

Ainsi, selon un premier objet, la présente invention concerne un monobrin en composite verre-résine (ci-après

en abrégé « CVR ») comportant des filaments de verre noyés dans une résine réticulée, caractérisé en ce que :

- la température de transition vitreuse (notée **Tg**) de la résine est égale ou supérieure à 190°C ;
- l'allongement à la rupture (noté **Ar**) du monobrin, mesuré à 23°C, est égal ou supérieur à 4,0% ;
- le module initial en extension (noté $\mathbf{E_{23}}$) du monobrin, mesuré à 23°C, est supérieur à 35 GPa ; et
- la partie réelle du module complexe (noté $\mathbf{E'_{190}}$) du monobrin, mesurée à 190°C par la méthode DTMA, est supérieure à 30 GPa.

L'invention concerne également l'utilisation d'un tel monobrin en CVR comme renfort (c'est-à-dire, élément de renforcement) de produits semi-finis ou d'articles finis en caoutchouc tels que des bandages, pneumatiques ou non pneumatiques.

L'invention concerne également ces produits semi-finis, articles en caoutchouc et bandages eux-mêmes, tant à l'état cru (c'est-à-dire avant cuisson ou vulcanisation) qu'à l'état cuit (après cuisson). Les bandages de l'invention, en particulier, peuvent être destinés à des véhicules à moteur du type tourisme, 4x4, "SUV" (*Sport Utility Vehicles*), mais également à des véhicules industriels choisis parmi camionnettes, "Poids-lourd" - i.e., métro, bus, engins de transport routier (camions, tracteurs, remorques), véhicules hors-la-route -, engins agricoles ou de Génie civil, avions, autres véhicules utilitaires de transport ou de manutention.

Le monobrin en CVR de l'invention est tout particulièrement utilisable comme élément de renforcement dans des armatures de sommet (ou ceintures) ou dans les armatures de carcasse de bandages pneumatiques, tels que décrits notamment dans les documents EP 1 167 080 (ou US 7 032 637) et WO 2012/115615.

Le monobrin en CVR de l'invention est aussi avantageusement utilisable, en raison de sa faible densité et de ses propriétés en compression améliorées, comme élément de renforcement dans les bandages ou roues flexibles du type non pneumatiques, c'est-à-dire supportés structurellement (sans pression interne). De tels bandages sont bien connus de l'homme du métier (voir par exemple EP 1 242 254 ou US 6 769 465, EP 1 359 028 ou US 6 994 135, US 7 201 194, WO 00/37269 ou US 6 640 859, WO 2007/085414, WO 2008/080535, WO 2009/033620, WO 2009/135561, WO 2012/032000) ; lorsqu'ils sont associés à tout élément mécanique rigide destiné à assurer la liaison entre le bandage flexible et le moyeu d'une roue, ils remplacent l'ensemble constitué par le bandage pneumatique, la jante et le disque tels qu'on les connaît sur la plupart des véhicules routiers actuels.

Le monobrin en CVR de l'invention est particulièrement utilisable comme élément de renforcement essentiellement inextensible des membranes utilisées dans la bande annulaire (ou bande de cisaillement) d'un bandage non pneumatique tel que décrit par exemple dans le brevet US 7 201 194, un tel bandage ayant pour caractéristique de comporter une bande annulaire qui supporte la charge sur le bandage et une pluralité d'éléments de support ou rayons, à très faible rigidité de compression, qui travaillent en tension pour transmettre les efforts entre la bande annulaire et le moyeu de la roue.

L'invention ainsi que ses avantages seront aisément compris à la lumière de la description détaillée et des exemples de réalisation qui suivent, ainsi que des figures 1 à 3 relatives à ces exemples qui schématisent (sans respect d'une échelle spécifique) :

- un dispositif utilisable pour la fabrication d'un monobrin en CVR selon l'invention (Fig. 1) ;
- en coupe transversale, un monobrin en CVR selon l'invention obtenu à l'aide de ce dispositif (Fig. 2) ;
- en coupe radiale, un exemple de bandage pneumatique conforme à l'invention, incorporant un monobrin en CVR selon l'invention (Fig. 3).

## 4. DESCRIPTION DETAILLEE DE L'INVENTION

Dans la présente demande, sauf indication expresse différente, tous les pourcentages (%) indiqués sont des pourcentages en masse.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

L'invention concerne donc un monobrin en composite verre-résine (en abrégé « CVR ») comportant des filaments de verre noyés dans une résine réticulée, caractérisé en ce que :

- la température de transition vitreuse (notée **Tg**) de la résine est égale ou supérieure à 190°C ;
- l'allongement à la rupture (noté **Ar**) du monobrin, mesuré à 23°C, est égal ou supérieur à 4,0% ;
- le module initial en extension (noté $\mathbf{E_{23}}$) du monobrin, mesuré à 23°C, est supérieur à 35 GPa ; et
- la partie réelle du module complexe (noté $\mathbf{E'_{190}}$) du monobrin, mesurée à 190°C par la méthode DTMA, est supérieure à 30 GPa.

Typiquement, les filaments de verre sont présents sous la forme d'une fibre multifilamentaire unique ou de plusieurs fibres multifilamentaires (si elles sont plusieurs, elles sont de préférence essentiellement unidirectionnelles), chacune d'entre elles pouvant comporter plusieurs dizaines, centaines voire milliers de filaments de verre unitaires. Ces filaments unitaires très fins ont généralement et de préférence un diamètre moyen de l'ordre de 5 à 30 µm, plus préférentiellement de 10 à 20 µm.

Par « résine », on entend ici la résine en tant que telle et toute composition à base de cette résine et comportant au moins un additif (c'est-à-dire un ou plusieurs additifs). Par résine « réticulée », on entend bien entendu que la résine est durcie (photodurcie et/ou thermodurcie), en d'autres termes sous la forme d'un réseau de liaisons tridimensionnelles, dans un état propre aux polymères dits thermodurcissables (par opposition aux polymères dits thermoplastiques).

La température de transition vitreuse notée **Tg** de la résine est de préférence supérieure à 190°C, plus préférentiellement supérieure à 195°C, en particulier supérieure à 200°C. Elle est mesurée de manière connue par DSC (*Differential Scanning Calorimetry*), au second passage, par exemple et sauf indications différentes spécifiées dans la présente demande, selon la norme ASTM D3418 de 1999 (appareil DSC "822-2" de Mettler Toledo ; atmosphère azote ; échantillons préalablement portés de la température ambiante (23°C) à 250°C (10°C/min), puis refroidis rapidement jusqu'à 23°C, avant enregistrement final de la courbe de DSC de 23°C à 250°C, selon une rampe de 10°C/min).

L'allongement à la rupture noté **Ar** du monobrin en CVR, mesuré à 23°C, est de préférence supérieur à 4,0%, plus préférentiellement supérieur à 4,2%, en particulier supérieur à 4,4%. Son module initial en extension $\mathbf{E_{23}}$, mesuré à 23°C, est de préférence supérieur à 36 GPa ; plus préférentiellement encore, il est supérieur à 40 GPa, de préférence supérieur à 42 GPa.

Les propriétés mécaniques en extension du monobrin en CVR (module $\mathbf{E_{23}}$ et allongement à la rupture **Ar**) sont mesurées de manière connue à l'aide d'une machine de traction « INSTRON » du type 4466 (logiciel BLUEHILL-2 fourni avec la machine de traction), selon la norme ASTM D 638, sur des monobrins en CVR bruts de fabrication c'est-à-dire non encollés, ou bien encollés (c'est-à-dire prêts à l'emploi), ou encore extraits du produit semi-fini ou de l'article en caoutchouc qu'ils renforcent. Avant mesure, ces monobrins sont soumis à un conditionnement préalable (stockage des monobrins pendant au moins 24 heures dans une atmosphère standard selon la norme européenne DIN EN 20139 (température de 23 ± 2°C ; hygrométrie de 50 ± 5 %). Les échantillons testés subissent une traction sur une longueur initiale de 400 mm à une vitesse nominale de 100 m/min, sous une prétension standard de 0,5 cN/tex. Tous les résultats donnés sont une moyenne de 10 mesures.

Le module $\mathbf{E'_{190}}$ est de préférence supérieur à 33 GPa, plus préférentiellement supérieur à 36 GPa.

Selon un autre mode de réalisation préférentiel, pour un compromis optimisé de propriétés thermiques et mécaniques du monobrin en CVR de l'invention, le rapport $\mathbf{E'_{(Tg'-25)} / E'_{23}}$ est supérieur à 0,85, de préférence supérieur à 0,90, $\mathbf{E'_{23}}$ et $\mathbf{E'_{(Tg'-25)}}$ étant la partie réelle du module complexe du monobrin mesurée par DMTA, respectivement à 23°C et à une température exprimée en °C égale à (Tg' - 25), expression dans laquelle **Tg'** représente la température de transition vitreuse mesurée cette fois par DMTA.

Selon un autre mode de réalisation plus préférentiel, le rapport $\mathbf{E'_{(Tg'-10)}} / \mathbf{E'_{23}}$ est supérieur à 0,80, de préférence supérieur à 0,85, $\mathbf{E'_{(Tg'-10)}}$ étant la partie réelle du module complexe du monobrin mesuré par DMTA à une température exprimée en °C égale à (Tg' - 10).

Les mesures de **E'** et **Tg'** sont effectuées de manière connue par DMTA (« *Dynamical Mechanical Thermal Analysis* »), avec un viscoanalyseur « $DMA^+$ 450 » de ACOEM (France), utilisant le logiciel « Dynatest 6.83 / 2010 » pilotant des essais de flexion, traction ou torsion.

Selon ce dispositif, le test de flexion trois points ne permettant pas de manière connue de rentrer les données géométriques initiales pour un monobrin de section circulaire, on peut seulement introduire la géométrie d'une section rectangulaire (ou carrée). Afin d'obtenir une mesure précise du module **E'** pour un monofilament de diamètre **D,** on introduit donc par convention dans le logiciel une section carrée de côté « **a** » ayant le même moment d'inertie de surface, ceci afin de travailler à même raideur **R** des éprouvettes testées.

Les relations bien connues qui suivent doivent s'appliquer (E étant le module du matériau, $I_s$ le moment d'inertie de surface du corps considéré, et * le symbole de multiplication) :

$$\mathbf{R} = E_{composite} * I_{section\ circulaire} = E_{composite} * I_{section\ carrée}$$

avec : $I_{section\ circulaire} = \pi * \mathbf{D}^4 / 64$ et $I_{section\ carrée} = \mathbf{a}^4/12$

On en déduit aisément la valeur du côté « **a** » du carré équivalent de même inertie de surface que celle de la section (circulaire) du monobrin de diamètre **D,** selon l'équation :

$$\mathbf{a} = \mathbf{D} * (\pi/6)^{0,25}.$$

Dans le cas où la section droite de l'échantillon testé n'est pas circulaire (ni rectangulaire), quelle que soit sa forme particulière, le même mode de calcul s'appliquera en déterminant préalablement le moment d'inertie de surface $I_s$ sur une coupe droite de l'échantillon testé.

L'éprouvette à tester, généralement de section circulaire et de diamètre **D,** a une longueur de 35 mm. Elle est disposée horizontalement sur deux appuis distants de 24 mm. Une sollicitation répétée en flexion est appliquée perpendiculairement au centre de l'éprouvette, à mi-distance des deux appuis, sous la forme d'un déplacement vertical d'amplitude égale à 0,1 mm (déformation donc asymétrique, l'intérieur de l'éprouvette étant uniquement sollicité en compression et pas en extension), à une fréquence de 10 Hz.

Le programme suivant est ensuite appliqué : sous cette sollicitation dynamique, l'éprouvette est progressivement chauffée de 25°C à 260°C avec une rampe de 2°C/min. A la fin du test on obtient les mesures du module élastique E', du module visqueux E" et de l'angle de perte (δ) en fonction de la température (où E' est la partie réelle et E" la partie imaginaire du module complexe) ; Tg' est la température de transition vitreuse correspondant au maximum (pic) de tan(δ).

Selon un mode de réalisation préférentiel, la déformation élastique en compression sous flexion est supérieure à 3,0%, plus préférentiellement supérieure à 3,5%, en particulier supérieure à 4,0%. Selon un autre mode de réalisation préférentiel, la contrainte de rupture en compression sous flexion est supérieure à 1 000 MPa, plus préférentiellement supérieure à 1 200 MPa, en particulier supérieure à 1 400 MPa.

Les propriétés ci-dessus en compression sous flexion sont mesurées sur le monobrin en CVR comme décrit dans la demande EP 1 167 080 précitée, par la méthode dite du test de boucle (D. Inclair, J. App. Phys. 21, 380, 1950). Dans le cas présent, on réalise une boucle que l'on amène progressivement au point de rupture. La nature de la rupture, facilement observable en raison de la grande taille de la section, permet immédiatement de se rendre compte que le monobrin en CVR de l'invention, sollicité en flexion jusqu'à rupture, se rompt du côté où la matière est en extension, ce que l'on identifie par simple observation. Etant donné que dans ce cas les dimensions de la boucle sont importantes, il est possible à tout instant de lire le rayon du cercle inscrit dans la boucle. Le rayon du cercle inscrit juste avant le point de rupture correspond au rayon de courbure critique, désigné par Rc.

La formule suivante permet ensuite de déterminer par le calcul la déformation élastique critique notée Ec (où r correspond au rayon du monobrin, c'est-à-dire D/2) :

$$Ec = r / (Rc + r)$$

La contrainte de rupture en compression sous flexion notée $\sigma_c$ est obtenue par le calcul par la formule suivante (où E est le module initial en extension) :

$$\sigma_c = Ec * E$$

Puisque, dans le cas du monobrin en CVR selon l'invention, la rupture de la boucle apparaît dans la partie en extension, on conclut que, en flexion, la contrainte de rupture en compression est supérieure à la contrainte de rupture en extension.

On peut également procéder à la rupture en flexion d'un barreau rectangulaire selon la méthode dite des trois points (ASTM D 790). Cette méthode permet également de vérifier, visuellement, que la nature de la rupture est bien en extension.

Selon un mode de réalisation préférentiel, la contrainte de rupture en compression pure est supérieure à 700 MPa, plus préférentiellement supérieure à 900 MPa, en particulier supérieure à 1 100 MPa. Pour éviter le flambage du monobrin en CVR sous compression, cette grandeur est mesurée selon la méthode décrite dans la publication « Critical compressive stress for continuous fiber unidirectional composites » de Thompson et al, Journal of Composite Materials, 46(26), 3231-3245.

Préférentiellement, dans le monobrin en CVR de l'invention, le taux d'alignement des filaments de verre est tel que plus de 85% (% en nombre) des filaments ont une inclinaison par rapport à l'axe du monobrin qui est inférieure à 2,0 degrés, plus préférentiellement inférieure à 1,5 degrés, cette inclinaison (ou défaut d'alignement) étant mesuré comme décrit dans la publication ci-dessus de Thompson et al.

Préférentiellement, le taux pondéral de filaments de verre dans le monobrin en CVR est compris entre 60 et 80%, de préférence entre 65 et 75%.

Ce taux pondéral est calculé en faisant le rapport du titre de la fibre de verre initiale sur le titre du monobrin en CVR final. Le titre (ou densité linéique) est déterminé sur au moins trois échantillons, chacun correspondant à une longueur de 50 m, par pesée de cette longueur ; le titre est donné en tex (poids en grammes de 1000 m de produit - pour rappel, 0, 111 tex équivaut à 1 denier).

De préférence, la densité (ou masse volumique en g/cm$^3$) du monobrin en CVR est comprise entre 1,8 et 2,1. Elle est mesurée (à 23°C) à l'aide d'une balance spécialisée de la société Mettler Toledo de type « PG503 DeltaRange » ; les échantillons, de quelques cm, sont successivement pesés dans l'air et plongés dans de l'éthanol ; le logiciel de l'appareil détermine ensuite la densité moyenne sur trois mesures.

Le diamètre **D** du monobrin en CVR de l'invention est de préférence compris entre 0,2 et 1,5 mm, plus préférentiellement entre 0,3 et 1,2 mm, en particulier entre 0,4 et 1,1 mm.

Cette définition couvre aussi bien des mono filaments de forme essentiellement cylindrique (à section droite circulaire) que des monofilaments de forme différente, par exemple des monofilaments oblongs (de forme plus ou moins aplatie) ou de section droite rectangulaire. Dans le cas d'une section non circulaire et sauf indication spécifique différente, **D** est par convention le diamètre dit d'encombrement, c'est-à-dire le diamètre du cylindre de révolution imaginaire enveloppant le monobrin, en d'autres termes le diamètre du cercle circonscrit entourant sa section droite.

La résine utilisée est par définition une résine réticulable (i.e., durcissable) susceptible d'être réticulée, durcie par toute méthode connue, en particulier par un rayonnement UV (ou UV-visible), de préférence émettant dans un spectre allant au moins de 300 nm à 450 nm.

A titre de résine réticulable, on utilise de préférence une résine polyester ou vinylester, plus préférentiellement une résine vinylester. Par résine "polyester", on entend de manière connue une résine du type polyester insaturé. Les résines vinylester sont quant à elles bien connues dans le domaine des matériaux composites.

Sans que cette définition soit limitative, la résine vinylester est préférentiellement du type époxyvinylester. On utilise plus préférentiellement une résine vinylester, notamment du type époxyde, qui au moins pour partie est à base (c'est-à-dire greffée sur une structure du type) novolaque (encore appelée phénoplaste) et/ou bisphénolique, soit préférentiellement une résine vinylester à base novolaque, bisphénolique, ou novolaque et bisphénolique.

De préférence, le module initial en extension de la résine, mesuré à 23°C, est supérieur à 3,0 GPa, plus préférentiellement supérieur à 3,5 GPa.

Une résine époxyvinylester à base novolaque (partie entre crochets dans la formule I ci-dessous) répond par exemple, de manière connue, à la formule (I) qui suit :

(I)

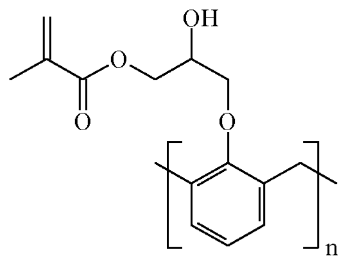

Une résine époxyvinylester à base bisphénolique A (partie entre crochets de la formule (II) ci-dessous) répond par exemple à la formule (le "A" rappelant que le produit est fabriqué à l'aide d'acétone):

(II)

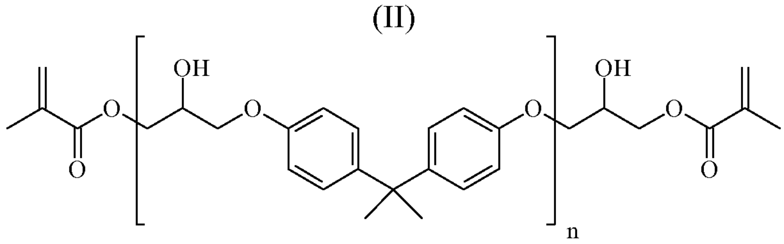

Une résine époxyvinylester de type novolaque et bisphénolique a montré d'excellents résultats. A titre d'exemple d'une telle résine, on peut citer notamment les résines vinylester « ATLAC 590 » et « E-Nova FW 2045 » de la société DSM (diluées avec environ 40% de styrène) décrites dans les demandes EP-A-1 074 369 et EP-A-1 174 250 précitées. Des résines époxyvinylester sont disponibles auprès d'autres fabricants tels que par exemple AOC (USA - résines « VIPEL »).

Le monobrin en CVR de l'invention est susceptible d'être préparé selon un procédé comportant les étapes connues suivantes :

- réaliser un arrangement rectiligne de fibres (filaments) de verre et entraîner cet arrangement dans une direction d'avancement :
- dans une chambre à vide, dégazer l'arrangement de fibres par l'action du vide ;
- en sortie de la chambre à vide, après dégazage, traverser une chambre d'imprégnation sous vide de manière à imprégner ledit arrangement de fibres par une résine ou composition de résine thermodurcissable, à l'état liquide, pour obtenir un imprégné contenant les filaments de verre et la résine ;
- faire passer ledit imprégné au travers d'une filière de calibrage ayant une section de surface et de forme prédéfinies, pour lui imposer une forme de monobrin (par exemple un mono filament de section droite ronde ou un ruban de section droite rectangulaire) ;
- en aval de la filière, dans une chambre d'irradiation UV, polymériser la résine sous l'action des UV ;
- puis enrouler pour stockage le monobrin ainsi obtenu.

Toutes les étapes ci-dessus (arrangement, dégazage, imprégnation, calibrage, polymérisation et enroulage final) du procédé de l'invention sont des étapes connues de l'homme du métier, ainsi que les matières (fibres multifilamentaires et compositions de résine) utilisées ; elles ont par exemple été décrites dans l'une et/ou l'autre des deux demandes EP-A-1 074 369 et EP-A-1 174 250 précitées.

On rappellera notamment qu'avant toute imprégnation des fibres, doit être conduite une étape essentielle de dégazage de l'arrangement de fibres par l'action du vide, afin notamment de renforcer l'efficacité de l'imprégnation ultérieure et surtout de garantir l'absence de bulles à l'intérieur du monobrin composite final.

Après traversée de la chambre à vide, les filaments de verre entrent dans une chambre d'imprégnation qui est totalement pleine de résine d'imprégnation, donc dépourvue d'air : c'est en ce sens qu'on peut qualifier cette étape d'imprégnation d'« imprégnation sous vide ».

La résine (composition de résine) d'imprégnation comporte de préférence un photo-initiateur sensible (réactif) aux UV au-delà de 300 nm, de préférence entre 300 et 450 nm. Ce photo-initiateur est utilisé à un taux préférentiel de 0,5 à 3%, plus préférentiellement de 1 à 2,5%. Elle peut également comporter un agent de réticulation, par exemple à un taux compris entre 5% et 15% (% en poids de composition d'imprégnation).

De préférence, ce photo-initiateur est de la famille des composés phosphine, plus préférentiellement un oxyde de bis(acyl)phosphine comme par exemple l'oxyde de bis-(2,4,6-triméthylbenzoyl)-phénylphosphine ("Irgacure 819" de la société BASF) ou un oxyde de mono(acyl)phosphine (par exemple "Esacure TPO" de la société Lamberti), de tels composés phosphine pouvant être utilisés en mélange avec d'autres photo-initiateurs, par exemple des photo-initiateurs de type alpha-hydroxy-cétone tels que par exemple la diméthylhydroxy-acétophénone (e.g. «Esacure KL200 » de Lamberti) ou la 1-hydroxy-cyclohexyl-phényl-cétone (e.g. « Esacure KS300 » de Lamberti), des benzophénones telles que la 2,4,6-triméthylbenzophénone (e.g. « Esacure TZT » de Lamberti) et/ou des dérivés de thioxanthones comme par exemple l'isopropylthioxanthone (e.g. « Esacure ITX » de Lamberti).

La filière dite "de calibrage" permet, grâce à une section droite de dimensions déterminées, généralement et de préférence circulaire ou rectangulaire, d'ajuster la proportion de résine par rapport aux fibres de verre tout en imposant à l'imprégné la forme et l'épaisseur visées pour le monobrin.

La chambre de polymérisation ou d'irradiation UV a ensuite pour fonction de polymériser, réticuler la résine sous l'action des UV. Elle comporte un ou de préférence plusieurs irradiateurs UV, constitué(s) par exemple chacun par une lampe UV de longueur d'onde de 200 à 600 nm.

Le monobrin en CVR final ainsi formé à travers la chambre d'irradiation UV, dans lequel la résine est maintenant à l'état solide, est ensuite récolté par exemple sur une bobine de réception sur laquelle il peut être enroulé sur une très grande longueur.

Entre la filière de calibrage et le support de réception finale, on préfère maintenir les tensions subies par les fibres de verre à un niveau modéré, de préférence compris entre 0,2 et 2,0 cN/tex, plus préférentiellement entre 0,3 et 1,5 cN/tex ; pour contrôler cela, on pourra par exemple mesurer ces tensions directement en sortie de la chambre d'irradiation, à l'aide de tensiomètres appropriés bien connus de l'homme du métier.

Outre les étapes connues précédemment décrites, le procédé pour fabriquer le monobrin en CVR de l'invention comporte les étapes essentielles qui suivent :

- la vitesse ($\mathbf{V_{ir}}$) de passage du monobrin dans la chambre d'irradiation est supérieure à 50 m/min ;
- la durée ($\mathbf{D_{ir}}$) de passage du monobrin dans la chambre d'irradiation est égale ou supérieure à 1,5 s ;
- la chambre d'irradiation comporte un tube transparent aux UV (tel qu'un tube en quartz ou de préférence en verre), dit tube d'irradiation, à travers lequel circule le monobrin en cours de formation, ce tube étant parcouru par un courant de gaz inerte, de préférence de l'azote.

Si ces étapes essentielles ne sont pas combinées, les propriétés améliorées du monobrin en CVR de l'invention, à savoir de **Tg,** d'allongement **Ar** et de modules (**E** et **E'**) ne peuvent pas être atteintes.

En particulier, en l'absence de balayage de gaz neutre tel que de l'azote dans le tube d'irradiation, on a constaté que les propriétés ci-dessus du monobrin en CVR étant dégradées assez rapidement en cours de fabrication et donc que la performance industrielle n'était plus garantie.

Par ailleurs, si la durée d'irradiation $\mathbf{D_{ir}}$ du monobrin dans la chambre d'irradiation est trop courte (inférieure à 1,5 s), de nombreux essais ont révélé (voir résultats du tableau ci-dessous, tests conduits à différentes vitesses $\mathbf{V_{ir}}$ supérieures à 50 m/min) que soit les valeurs de Tg étaient insuffisantes, inférieures à 190°C, soit les valeurs de **Ar** étaient trop faibles, inférieures à 4,0%.

**Tableau**

| $\mathbf{D_{ir}}$ (s) | **Tg**(°C) | **Ar**(%) |
|---|---|---|
| Essai 1 | | |
| 1.2 | 186.1 | 3.4 |
| 1.3 | 188.8 | 3.8 |
| 1.45 | 189.1 | 3.9 |
| 1.7 | 194.8 | 4.3 |
| 2.0 | 195.7 | 4.5 |
| Essai 2 | | |
| 1.5 | 190.0 | 4.0 |
| 1.65 | 192.7 | 4.1 |
| 1.8 | 195.0 | 4.1 |
| 2.0 | 199.2 | 4.3 |
| Essai 3 | | |
| 2.0 | 192.8 | 4.3 |
| 2.4 | 193.7 | 4.5 |
| 3.0 | 196.9 | 4.6 |
| 4.0 | 195.0 | 4.7 |
| Essai 4 | | |
| 1.0 | 184.7 | 4.3 |
| 1.2 | 187.3 | 4.2 |
| 1.6 | 190.5 | 4.2 |
| 2.0 | 200.5 | 4.3 |

On a constaté en outre qu'une vitesse d'irradiation $\mathbf{V_{ir}}$ élevée (supérieure à 50 m/min, de préférence comprise entre 50 et 150 m/min) était favorable d'une part à un excellent taux d'alignement des filaments de verre à l'intérieur du monobrin en CVR, d'autre part à un meilleur maintien du vide dans la chambre à vide avec un risque nettement réduit de voir remonter une certaine fraction de résine d'imprégnation de la chambre d'imprégnation vers la chambre à vide, et donc à une meilleure qualité d'imprégnation.

Le diamètre du tube d'irradiation (de préférence en verre) est préférentiellement compris entre 10 et 80 mm, plus préférentiellement entre 20 et 60 mm.

Préférentiellement, la vitesse $\mathbf{V_{ir}}$ est comprise entre 50 et 150 m/min, plus préférentiellement dans un domaine de 60 à 120 m/min.

Préférentiellement, la durée d'irradiation $\mathbf{D_{ir}}$ est comprise entre 1,5 et 10 s, plus préférentiellement dans un domaine de 2 à 5 s.

Selon un autre mode de réalisation préférentiel, la chambre d'irradiation comporte une pluralité d'irradiateurs (ou radiateurs) UV, c'est-à-dire au moins deux (deux ou plus de deux) qui sont disposés en ligne autour du tube d'irradiation. Chaque irradiateur UV comporte typiquement une (au moins une) lampe UV (émettant de préférence dans un spectre de 200 à 600 nm) et un réflecteur parabolique au foyer duquel se trouve le centre du tube d'irradiation ; il

délivre une puissance linéique préférentiellement comprise entre 2 000 et 14 000 watts par mètre. Plus préférentiellement encore, la chambre d'irradiation comporte au moins trois, en particulier au moins quatre irradiateurs UV en ligne.

Encore plus préférentiellement, la puissance linéique délivrée par chaque irradiateur UV est comprise entre 2 500 et 12 000 watts par mètre, en particulier comprise dans un domaine de 3 000 à 10 000 watts par mètre.

Des radiateurs UV convenant au procédé de l'invention sont bien connus de l'homme du métier, par exemple ceux commercialisés par la société Dr. Hönle AG (Allemagne) sous la référence « 1055 LCP AM UK », équipés de lampes « UVAPRINT » (lampes au mercure haute pression dopé au fer). La puissance nominale (maximale) de chaque radiateur de ce type est égale à environ 13 000 Watts, la puissance délivrée effectivement pouvant être réglée avec un potentiomètre entre 30 et 100% de la puissance nominale.

De préférence, la température de la résine (composition de résine), dans la chambre d'imprégnation, est comprise entre 50°C et 95°C, plus préférentiellement entre 60°C et 90°C.

Selon un autre mode de réalisation préférentiel, les conditions d'irradiation sont ajustées de telle manière que la température du monobrin en CVR, en sortie de la chambre d'imprégnation, soit supérieure à la Tg de la résine réticulée ; plus préférentiellement, cette température est supérieure à la Tg de la résine réticulée et inférieure à 270°C.

## 5. EXEMPLES DE REALISATION DE L'INVENTION

On décrit ci-après des exemples de fabrication de monobrins en CVR selon l'invention et leur utilisation comme renforts de bandages pneumatiques.

La figure 1 annexée schématise très simplement un exemple d'un dispositif 10 permettant la production de monobrins en CVR conformes à l'invention.

On y voit une bobine 11a contenant, dans l'exemple illustré, des fibres de verre 11b (sous forme de multifilaments). La bobine est déroulée en continu par entraînement, de manière à réaliser un arrangement rectiligne 12 de ces fibres 11b. En général, les fibres de renforcement sont livrées en "rovings", c'est à dire déjà en groupes de fibres enroulées en parallèle sur une bobine ; par exemple, on utilise des fibres commercialisées par Owens Corning sous la désignation de fibre "Advantex", de titre égal à 1200 tex (pour rappel, 1 tex = 1 g/1000 m de fibre). C'est par exemple la traction exercée par la réception tournante 26 qui va permettre l'avancement des fibres en parallèle et du monobrin en CVR tout le long de l'installation.

Cet arrangement 12 traverse ensuite une chambre à vide 13 (reliée à une pompe à vide non représentée), disposée entre une tubulure d'entrée 13a et une tubulure de sortie 13b débouchant sur une chambre d'imprégnation 14, les deux tubulures de préférence à paroi rigide ayant par exemple une section minimale supérieure (typiquement deux fois plus) à la section totale de fibres et une longueur très supérieure (typiquement 50 fois plus) à ladite section minimale.

Comme déjà enseigné par la demande EP-A-1 174 250 précitée, l'utilisation de tubulures à paroi rigide, aussi bien pour l'orifice d'entrée dans la chambre à vide que pour l'orifice de sortie de la chambre à vide et le transfert depuis la chambre à vide jusqu'à la chambre d'imprégnation, s'avère compatible à la fois avec des cadences élevées de passage des fibres au travers des orifices sans rompre les fibres, mais aussi permet d'assurer une étanchéité suffisante. Il suffit, au besoin expérimentalement, de rechercher la plus grande section de passage, compte tenu de la section totale des fibres à traiter, permettant encore d'offrir une étanchéité suffisante, compte tenu de la vitesse d'avancement des fibres et de la longueur des tubulures. Typiquement, le vide à l'intérieur de la chambre 13 est par exemple de l'ordre de 0,1 bar, la longueur de la chambre à vide est d'environ 1 mètre.

En sortie de la chambre à vide 13 et de la tubulure de sortie 13b, l'arrangement 12 de fibres 11b traverse une chambre d'imprégnation 14 comportant un réservoir d'alimentation 15 (relié à une pompe doseuse non représentée) et un réservoir d'imprégnation 16 étanche totalement rempli de composition d'imprégnation 17 à base d'une résine durcissable du type vinylester (e.g., "E-Nova FW 2045" de DSM). A titre d'exemple, la composition 17 comporte en outre (à un taux pondéral de 1 à 2%) un agent photo-initiateur approprié pour le rayonnement UV et/ou UV-visible par lequel la composition sera ultérieurement traitée, par exemple l'oxyde de bis-(2,4,6-triméthylbenzoyl)-phénylphosphine ("Irgacure 819" de la société BASF). Elle peut également comporter (par exemple environ 5% à 15 %) d'un agent réticulant tel que par exemple le tris(2-hydroxy éthyl)isocyanurate triacrylate (« SR 368 » de la société Sartomer). Bien entendu, la composition d'imprégnation 17 est à l'état liquide.

Préférentiellement, la longueur de la chambre d'imprégnation est de plusieurs mètres, par exemple comprise entre 2 et 10 m, en particulier entre 3 et 5 m.

Ainsi, ressort de la chambre d'imprégnation 14, dans une tubulure de sortie 18 étanche (toujours sous vide primaire), un imprégné qui comporte par exemple (% en poids) de 65 à 75% de fibres solides 11b, le reste (25 à 35%) étant constitué par la matrice liquide d'imprégnation 17.

L'imprégné passe ensuite à travers des moyens de calibrage 19 comportant au moins une filière de calibrage 20 dont le canal (non représenté ici), par exemple de forme circulaire, rectangulaire ou encore conique, est adapté aux conditions particulières de réalisation. A titre d'exemple, ce canal a une section droite minimale de forme circulaire dont

l'orifice aval a un diamètre légèrement supérieur à celui du monobrin visé. Ladite filière a une longueur qui est typiquement supérieure d'au moins 100 fois à la dimension minimale de la section minimale. Elle a pour fonction d'assurer une grande précision dimensionnelle au produit fini, elle peut également jouer un rôle de dosage du taux de fibre par rapport à la résine. Selon une variante de réalisation possible, la filière 20 peut être directement intégrée à la chambre d'imprégnation 14, ce qui évite par exemple l'emploi de la tubulure de sortie 18.

Préférentiellement, la longueur de la zone de calibrage est de plusieurs centimètres, par exemple comprise entre 5 et 50 cm, en particulier entre 5 et 20 cm.

Grâce aux moyens de calibrage (19, 20) est obtenu à ce stade un monobrin composite "liquide" 21 (liquide au sens que sa résine d'imprégnation est toujours liquide) dont la forme de la section droite est préférentiellement essentiellement circulaire.

En sortie des moyens de calibrage (19, 20), le monobrin composite liquide 21 ainsi obtenu est ensuite polymérisé par passage à travers une chambre d'irradiation UV (22) comportant un tube en verre étanche (23) à travers lequel circule le monobrin composite ; ledit tube, dont le diamètre est typiquement de quelques cm (par exemple 2 à 3 cm), est irradié par une pluralité (ici, par exemple 4) d'irradiateurs UV (24) en ligne (lampes "UVAprint" de la société Dr. Hönle, de longueur d'onde 200 à 600 nm) disposés à courte distance (quelques cm) du tube en verre.

Préférentiellement, la longueur de la chambre d'irradiation est de plusieurs mètres, par exemple comprise entre 2 et 15 m, en particulier entre 3 et 10 m.

Le tube d'irradiation 23 est dans cet exemple parcouru par un courant d'azote.

Les conditions d'irradiation sont préférentiellement ajustées de telle manière que, en sortie de la chambre d'imprégnation, la température du monobrin en CVR, mesurée en surface de ce dernier (par exemple à l'aide d'un thermocouple), soit supérieure à la Tg de la résine réticulée (en d'autres termes supérieure à 190°C), et plus préférentiellement inférieure à 270°C.

Une fois la résine polymérisée (durcie), le monobrin en CVR (25), cette fois à l'état solide, entraîné dans le sens de la flèche F, arrive ensuite sur sa bobine de réception finale (26).

On obtient finalement un bloc composite terminé de fabrication tel que schématisé très simplement à la figure 2, sous la forme d'un monobrin en CVR continu (25), de très grande longueur, dont les filaments de verre unitaires (251) sont répartis de manière homogène dans tout le volume de résine durcie (252). Son diamètre est par exemple égal à environ 1 mm.

Grâce aux conditions opératoires décrites ci-dessus, le procédé de l'invention peut être mise en oeuvre à haute vitesse, supérieure à 50 m/min, de préférence entre 50 et 150 m/min, plus préférentiellement dans un domaine de 60 à 120 m/min.

Le monobrin en CVR de l'invention ainsi fabriqué est avantageusement utilisable pour le renforcement de bandages, pneumatiques ou non pneumatiques, de tous types de véhicules, en particulier de véhicules tourisme ou véhicules industriels tels que Poids-lourd, Génie civil, avions, autres véhicules de transport ou de manutention.

Pour les exemples d'application en bandages pneumatiques ci-après décrits, ce sont des bobines de 40 000 mètres (soit près de 7 heures de fabrication en continu à une vitesse de 100 m/min) qui ont été produites, ce qui illustre bien la performance industrielle du procédé précédemment décrit.

A titre d'exemple, la figure 3 représente de manière très schématique (sans respect d'une échelle spécifique), une coupe radiale d'un bandage pneumatique conforme à l'invention pour véhicule du type tourisme.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9.

L'armature de carcasse 7 est de manière connue en soi constituée d'au moins une nappe de caoutchouc renforcée par des renforts textiles dits "radiaux", c'est-à-dire que ces renforts sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

La ceinture 6 est par exemple constituée, de manière connue en soi, par au moins deux nappes de caoutchouc dites "nappes de travail" ou "nappes de triangulation", superposées et croisées, renforcées de câbles métalliques disposés sensiblement parallèlement les uns par rapport aux autres et inclinés par rapport au plan circonférentiel médian, ces nappes de travail pouvant être associées ou non à d'autres nappes et/ou tissus de caoutchouc. Ces nappes de travail ont pour fonction première de donner au bandage pneumatique une rigidité de dérive élevée. La ceinture 6 comporte en outre dans cet exemple une nappe de caoutchouc dite "nappe de frettage" renforcée par des fils de renforcement dits "circonférentiels", c'est-à-dire que ces fils de renforcement sont disposés pratiquement parallèles les uns aux autres et s'étendent sensiblement circonférentiellement autour du bandage pneumatique de manière à former un angle préférentiellement compris dans un domaine de 0 à 10° avec le plan circonférentiel médian. Ces fils de

renforcement circonférentiels ont pour fonction première, on le rappelle, de résister à la centrifugation du sommet à haute vitesse.

Le pneumatique 1 de l'invention a par exemple pour caractéristique essentielle qu'au moins sa ceinture (6) et/ou son armature de carcasse (7) comporte un monobrin en CVR selon l'invention. Selon un autre exemple de réalisation possible de l'invention, c'est la zone bourrelet qui peut être renforcée d'un tel monobrin ; ce sont par exemple les tringles (5) qui pourraient être constituées, en tout ou partie, d'un monobrin en CVR selon l'invention.

Les compositions de caoutchouc utilisées pour les nappes de caoutchouc renforcées de monobrins en CVR sont des compositions conventionnelles pour calandrage de renforts textiles, typiquement à base de caoutchouc naturel, de noir de carbone ou de silice, d'un système de vulcanisation et des additifs usuels. Grâce à l'invention, comparativement aux compositions de caoutchouc renforcées de câbles d'acier, elles sont avantageusement dépourvues de sel métallique tel que sel de cobalt. L'adhésion entre le monobrin en CVR de l'invention et la couche de caoutchouc qui l'enrobe est assurée de manière connue, par exemple par une colle usuelle du type RFL (résorcinol-formol-latex).

Des tests particuliers en bandages pneumatiques ont été réalisés, où des monobrins en CVR ont été utilisés comme renforts longilignes, c'est-à-dire non câblés, dans des nappes de travail croisées à la place de câbles en acier conventionnels, comme décrit dans le document précité EP 1 167 080.

Ces tests ont démontré clairement que les monobrins en CVR de l'invention, grâce à leurs propriétés en compression améliorées, ne subissaient pas de casses en compression au cours de la fabrication-même de ces bandages pneumatiques, contrairement aux monobrins en CVR de l'art antérieur tels que décrits dans EP 1 167 080.

Tout en allégeant notablement les bandages pneumatiques et supprimant les risques liés à la corrosion, par rapport à des bandages dont la ceinture est conventionnellement renforcée de câbles d'acier, les monobrins en CVR de l'invention ont révélé comme autre avantage notable celui de ne pas augmenter le bruit de roulage des bandages pneumatiques, contrairement aux autres solutions (renforts) textiles connues.

Ces monobrins en CVR de l'invention ont également montré une excellente performance comme renforts circonférentiels dans des bandages du type non pneumatiques tels que décrits en introduction du présent mémoire.

## Revendications

1. Monobrin en composite verre-résine comportant des filaments de verre noyés dans une résine réticulée, **caractérisé en ce que** :

   - la température de transition vitreuse notée **Tg** de la résine est égale ou supérieure à 190°C ;
   - l'allongement à la rupture noté **Ar** du monobrin, mesuré à 23°C, est égal ou supérieur à 4,0% ;
   - le module initial en extension noté $\mathbf{E_{23}}$ du monobrin, mesuré à 23°C, est supérieur à 35 GPa ; et
   - la partie réelle du module complexe noté $\mathbf{E'_{190}}$ du monobrin, mesurée à 190°C par la méthode DTMA, est supérieure à 30 GPa.

2. Monobrin selon la revendication 1, dans lequel la **Tg** de la résine est supérieure à 195°C, de préférence supérieure à 200°C.

3. Monobrin selon les revendications 1 ou 2, dont l'allongement **Ar** est supérieur à 4,2%, de préférence supérieur à 4,4%.

4. Monobrin selon l'une quelconque des revendications 1 à 3, dont le rapport $\mathbf{E'_{(Tg'-25)}} / \mathbf{E'_{23}}$ est supérieur à 0,85, de préférence supérieur à 0,90, $\mathbf{E'_{23}}$ et $\mathbf{E'_{(Tg'-25)}}$ étant la partie réelle du module complexe du monobrin mesurée par DTMA, respectivement à 23°C et à une température exprimée en °C égale à Tg' - 25, et Tg' étant la température de transition vitreuse de la résine mesurée par DTMA.

5. Monobrin selon l'une quelconque des revendications 1 à 4, dont le rapport $\mathbf{E'_{(Tg'-10)}} / \mathbf{E'_{23}}$ est supérieur à 0,80, de préférence supérieur à 0,85, $\mathbf{E'_{23}}$ et $\mathbf{E'_{(Tg'-10)}}$ étant la partie réelle du module complexe du monobrin mesuré par DTMA, respectivement à 23°C et à une température exprimée en °C égale à Tg' - 10, et **Tg'** étant la température de transition vitreuse de la résine mesurée par DTMA.

6. Monobrin selon l'une quelconque des revendications 1 à 5, dont le module $\mathbf{E_{23}}$ est supérieur à 40 GPa, de préférence supérieur à 42 GPa.

7. Monobrin selon l'une quelconque des revendications 1 à 6, dont le module $\mathbf{E'_{190}}$ est supérieur à 33 GPa, de préférence supérieur à 36 GPa.

8. Monobrin selon l'une quelconque des revendications 1 à 7, dont la déformation élastique en compression sous flexion est supérieure à 3,0%, de préférence supérieure à 3,5%, plus préférentiellement supérieure à 4,0%.

9. Monobrin selon l'une quelconque des revendications 1 à 8, dont la contrainte de rupture en compression sous flexion est supérieure à 1 000 MPa, de préférence supérieure à 1 200 MPa, plus préférentiellement supérieure à 1 400 MPa.

10. Monobrin selon l'une quelconque des revendications 1 à 9, dans lequel le taux pondéral de filaments de verre est compris entre 60 et 80%, de préférence entre 65 et 75% et dont la masse volumique est comprise entre 1,8 et 2,1 $g/cm^3$.

11. Monobrin selon l'une quelconque des revendications 1 à 10, dans lequel la résine est une résine vinylester.

12. Monobrin selon l'une quelconque des revendications 1 à 11, dans lequel le module initial en extension de la résine, mesuré à 23°C, est supérieur à 3,0 GPa, de préférence supérieur à 3,5 GPa.

13. Monobrin selon l'une quelconque des revendications 1 à 12, dont le diamètre D du monobrin est compris entre 0,2 et 1,5 mm, de préférence entre 0,3 et 1,2 mm, en particulier entre 0,4 et 1,1 mm.

14. Bandage pour véhicule, pneumatique ou non pneumatique, comportant un monobrin en composite verre-résine selon l'une quelconque des revendications 1 à 13.

15. Bandage selon la revendication 14, dans lequel le monobrin en composite verre-résine est présent dans la ceinture (6), dans l'armature de carcasse (7) du bandage ou dans la zone bourrelet (4) du bandage.

**Patentansprüche**

1. Einzelstrang aus glasfaserverstärktem Kunststoff, der in ein vernetztes Harz eingebettete Glasfilamente aufweist, **dadurch gekennzeichnet, dass**:

   - die mit Tg bezeichnete Glasübergangstemperatur des Harzes gleich oder höher als 190°C ist;
   - die mit Ar bezeichnete Bruchdehnung des Einzelstrangs, gemessen bei 23°C, gleich oder größer als 4,0% ist;
   - das mit $E_{23}$ bezeichnete anfängliche Dehnungsmodul des Einzelstrangs, gemessen bei 23°C, größer als 35 GPa ist; und
   - der Realteil des mit $E'_{190}$ bezeichneten komplexen Moduls des Einzelstrangs, gemessen bei 190°C durch das DTMA-Verfahren, größer als 30 GPa ist.

2. Einzelstrang nach Anspruch 1, wobei die Tg des Harzes höher als 195°C, vorzugsweise höher als 200°C ist.

3. Einzelstrang nach den Ansprüchen 1 oder 2, dessen Dehnung Ar größer als 4,2%, vorzugsweise größer als 4,4% ist.

4. Einzelstrang nach einem der Ansprüche 1 bis 3, dessen Verhältnis $E'_{(Tg'-25)}/E'_{23}$ höher als 0,85, vorzugsweise höher als 0,90 ist, wobei $E'_{23}$ und $E'_{(Tg'-25)}$ der durch DTMA gemessene Realteil des komplexen Moduls des Einzelstrangs, bei 23°C bzw. einer in °C ausgedrückten Temperatur gleich Tg'-25 sind, und Tg' die durch DTMA gemessene Glasübergangstemperatur des Harzes ist.

5. Einzelstrang nach einem der Ansprüche 1 bis 4, dessen Verhältnis $E'_{(Tg'-10)}/E'_{23}$ höher als ä 0,80, vorzugsweise höher als 0,85 ist, wobei $E'_{23}$ und $E'_{(Tg'-10)}$ der durch DTMA gemessene Realteil des komplexen Moduls des Einzelstrangs, bei 23°C bzw. einer Temperatur ausgedrückt in °C gleich Tg'-10 sind, und Tg' die durch DTMA gemessene Glasübergangstemperatur des Harzes ist.

6. Einzelstrang nach einem der Ansprüche 1 bis 5, dessen Modul $E_{23}$ größer als 40 GPa, vorzugsweise größer als 42 GPa ist.

7. Einzelstrang nach einem der Ansprüche 1 bis 6, dessen Modul $E'_{190}$ größer als 33 GPa, vorzugsweise größer als 36 GPa ist.

**8.** Einzelstrang nach einem der Ansprüche 1 bis 7, dessen elastische Druckverformung bei Biegebelastung größer als 3,0%, vorzugsweise größer als 3,5%, noch bevorzugter größer als 4,0% ist.

**9.** Einzelstrang nach einem der Ansprüche 1 bis 8, dessen Druckfestigkeit bei Biegebelastung höher als 1000 MPa, vorzugsweise höher als 1200 MPa, noch bevorzugter höher als 1400 MPa ist.

**10.** Einzelstrang nach einem der Ansprüche 1 bis 9, wobei der Gewichtsanteil von Glasfilamenten zwischen 60 und 80%, vorzugsweise zwischen 65 und 75% liegt, und dessen Massendichte zwischen 1,8 und 2,1 g/cm$^3$ liegt.

**11.** Einzelstrang nach einem der Ansprüche 1 bis 10, wobei das Harz ein Vinylesterharz ist.

**12.** Einzelstrang nach einem der Ansprüche 1 bis 11, wobei das anfängliche Dehnungsmodul des Harzes, gemessen bei 23°C, größer als 3,0 GPa, vorzugsweise größer als 3,5 GPa ist.

**13.** Einzelstrang nach einem der Ansprüche 1 bis 12, dessen Durchmesser D des Einzelstrangs zwischen 0,2 und 1,5 mm, vorzugsweise zwischen 0,3 und 1,2 mm, insbesondere zwischen 0,4 und 1,1 mm liegt.

**14.** Reifen für ein Fahrzeug, Luftreifen oder nicht, der einen Einzelstrang aus glasfaserverstärktem Kunststoff nach einem der Ansprüche 1 bis 13 aufweist.

**15.** Reifen nach Anspruch 14, wobei der Einzelstrang aus glasfaserverstärktem Kunststoff im Gürtel (6), in der Karkassenbewehrung (7) des Reifens oder in der Wulstzone (4) des Reifens vorhanden ist.

## Claims

**1.** Monofilament made of glass-resin composite comprising glass filaments embedded in a crosslinked resin, **characterized in that**:

- the glass transition temperature, denoted **Tg,** of the resin is equal to or greater than 190°C;
- the elongation at break, denoted **Eb,** of the monofilament, measured at 23°C, is equal to or greater than 4.0%;
- the initial tensile modulus, denoted $\mathbf{E_{23}}$, of the monofilament, measured at 23°C, is greater than 35 GPa; and
- the real part of the complex modulus, denoted $\mathbf{E'_{190}}$, of the monofilament, measured at 190°C by the DMTA method, is greater than 30 GPa.

**2.** Monofilament according to Claim 1, in which the **Tg** of the resin is greater than 195°C, preferably greater than 200°C.

**3.** Monofilament according to Claim 1 or 2, the elongation **Eb** of which is greater than 4.2%, preferably greater than 4.4%.

**4.** Monofilament according to any one of Claims 1 to 3, the $\mathbf{E'_{(Tg'-25)}} / \mathbf{E'_{23}}$ ratio of which is greater than 0.85, preferably greater than 0.90, $\mathbf{E'_{23}}$ and $\mathbf{E'_{(Tg'-25)}}$ being the real part of the complex modulus of the monofilament measured by DMTA, respectively at 23°C and at a temperature expressed in °C equal to Tg' - 25, and Tg' being the glass transition temperature of the resin measured by DMTA.

**5.** Monofilament according to any one of Claims 1 to 4, the $\mathbf{E'_{(Tg'-10)}} / \mathbf{E'_{23}}$ ratio of which is greater than 0.80, preferably greater than 0.85, $\mathbf{E'_{23}}$ and $\mathbf{E'_{(Tg'-10)}}$ being the real part of the complex modulus of the monofilament measured by DMTA, respectively at 23°C and at a temperature expressed in °C equal to Tg' - 10, and **Tg'** being the glass transition temperature of the resin measured by DMTA.

**6.** Monofilament according to any one of Claims 1 to 5, the $\mathbf{E_{23}}$ modulus of which is greater than 40 GPa, preferably greater than 42 GPa.

**7.** Monofilament according to any one of Claims 1 to 6, the $\mathbf{E'_{190}}$ modulus of which is greater than 33 GPa, preferably greater than 36 GPa.

**8.** Monofilament according to any one of Claims 1 to 7, the elastic deformation in compression under flexion of which is greater than 3.0%, preferably greater than 3.5%, more preferably greater than 4.0%.

**9.** Monofilament according to any one of Claims 1 to 8, the breaking stress in compression under flexion of which is greater than 1000 MPa, preferably greater than 1200 MPa, more preferably greater than 1400 MPa.

**10.** Monofilament according to any one of Claims 1 to 9, in which the glass filaments weight content is between 60 and 80%, preferably between 65 and 75%, and the density of which is between 1.8 and 2.1 g/cm$^3$.

**11.** Monofilament according to any one of Claims 1 to 10, in which the resin is a vinyl ester resin.

**12.** Monofilament according to any one of Claims 1 to 11, in which the initial tensile modulus of the resin, measured at 23°C, is greater than 3.0 GPa, preferably greater than 3.5 GPa.

**13.** Monofilament according to any one of Claims 1 to 12, the monofilament diameter D of which is between 0.2 and 1.5 mm, preferably between 0.3 and 1.2 mm, in particular between 0.4 and 1.1mm.

**14.** Pneumatic or non-pneumatic vehicle tyre comprising a glass-resin composite monofilament according to any one of Claims 1 to 13.

**15.** Tyre according to Claim 14, in which the glass-resin composite monofilament is present in the belt (6), in the carcass reinforcement (7) of the tyre, or in the bead zone (4) of the tyre.

**Fig. 1**

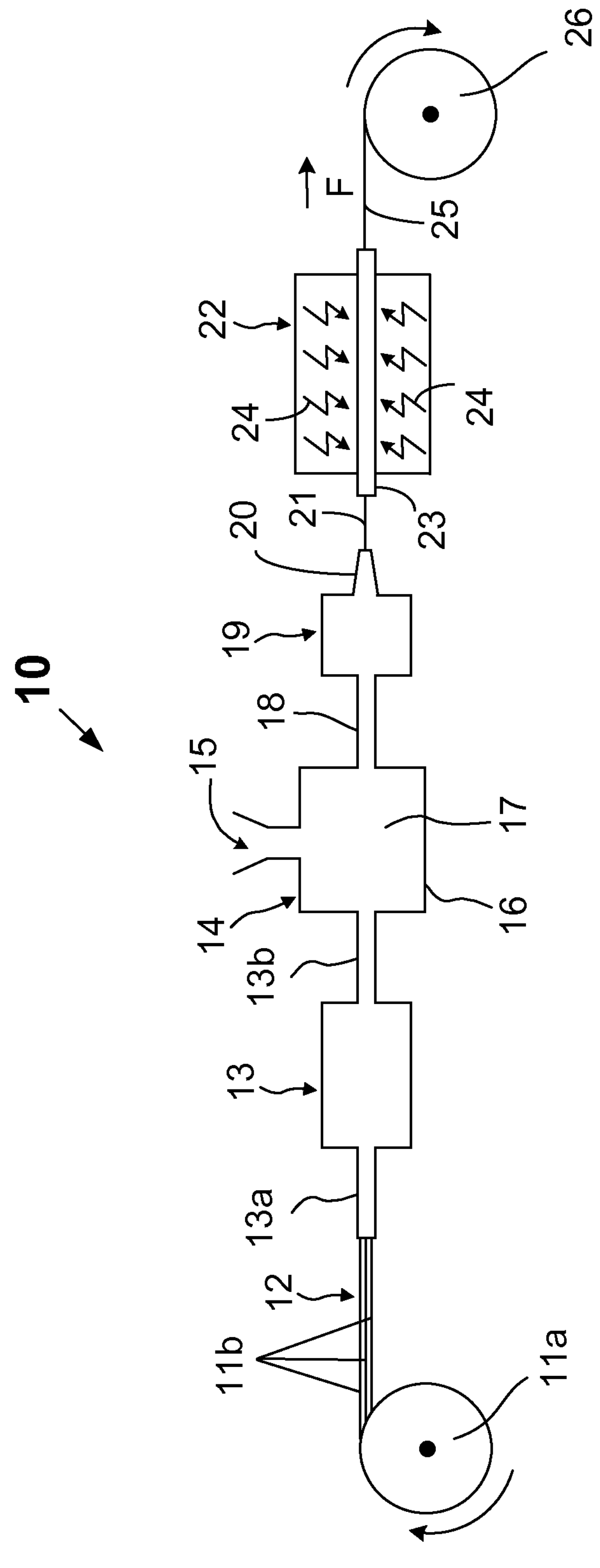

**Fig. 2**

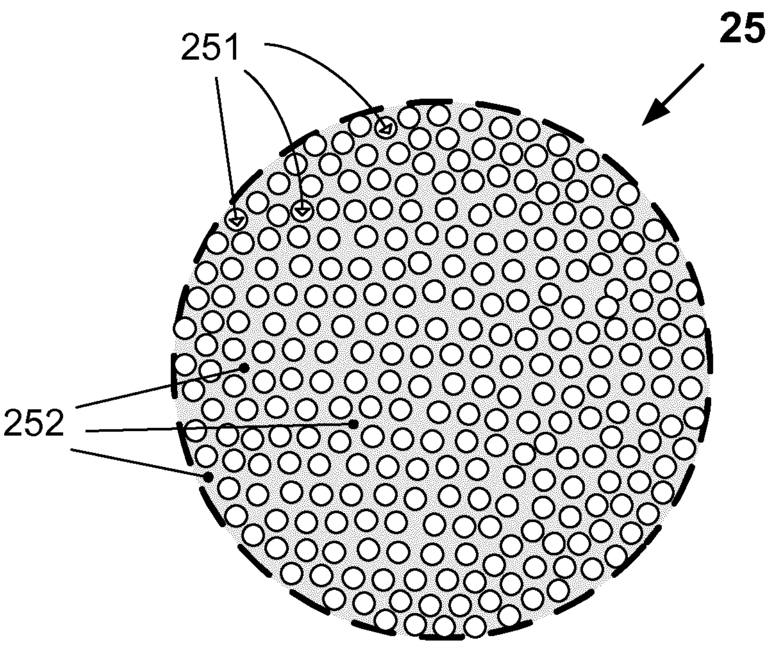

**Fig. 3**

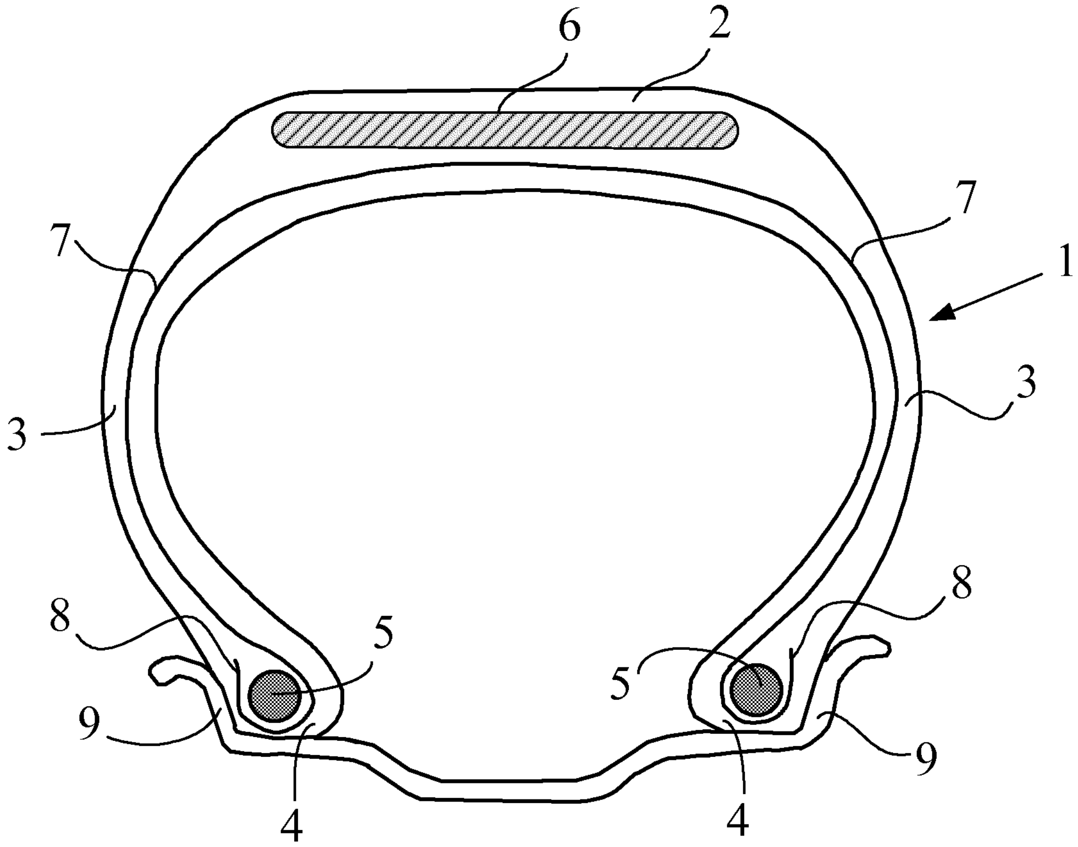

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 1167080 A
- US 7032637 B
- EP 1174250 A
- US 6926853 B
- US 7484949 B
- WO 2012115615 A
- EP 1242254 A
- US 6769465 B
- EP 1359028 A
- US 6994135 B
- US 7201194 B
- WO 0037269 A
- US 6640859 B
- WO 2007085414 A
- WO 2008080535 A
- WO 2009033620 A
- WO 2009135561 A
- WO 2012032000 A
- EP 1074369 A


### Littérature non-brevet citée dans la description


- **D. INCLAIR.** *J. App. Phys.,* 1950, vol. 21, 380
- **THOMPSON et al.** Critical compressive stress for continuous fiber unidirectional composites. *Journal of Composite Materials,* vol. 46 (26), 3231-3245